# EUROPÄISCHE PATENTSCHRIFT

(11) **EP 1 593 815 B1**
(45) Veröffentlichungstag und Bekanntmachung des Hinweises auf die Patenterteilung: **27.07.2011**
(21) Anmeldenummer: 05006052.4
(22) Anmeldetag: 19.03.2005
(51) Int. Cl.: F01D 15/10, F01D 25/14

(54) **Turbomaschine für Tieftemperaturanwendungen**
Turbo machine for low temperature applications
Turbomachine pour des applications à basse température

(30) Priorität: 07.05.2004 DE 102004023148
(43) Veröffentlichungstag der Anmeldung: 09.11.2005
(73) Patentinhaber: ATLAS COPCO ENERGAS GMBH, 50999 Köln (DE)
(72) Erfinder: Bosen, Werner, Dipl.-Ing., 51143 Köln (DE)
(74) Vertreter: Albrecht, Rainer Harald

(56) Entgegenhaltungen:
- EP-A- 0 990 798
- US-A- 5 249 934
- US-A- 5 638 796
- US-A- 5 980 218

## Beschreibung

Die Erfindung betrifft eine Turbomaschine für Tieftemperaturanwendungen mit
Rotorwelle,
mindestens einem an einem Wellenende der Rotorwelle fliegend angeordneten Laufrad,
einer elektrischen Maschine mit einem Wicklungen aufweisenden Ständer und einem auf der Rotorwelle angeordneten elektrischen Läufer,
einem Stufengehäuse, welches das Laufrad umgibt und Anschlüsse für ein das Stufengehäuse durchströmendes kaltes Gas aufweist, und
einem Maschinengehäuse, in dem die elektrische Maschine und Wellenlager für die Rotorwelle angeordnet sind,
wobei das Maschinengehäuse mit dem Stufengehäuse verbunden ist.

Die in der Praxis bekannten Turbomaschinen mit den eingangs beschriebenen Merkmalen werden mit hohen Drehzahlen betrieben, woraus eine beachtliche Wärmentwicklung sowohl in der elektrischen Maschine als auch in den Wellenlagern resultiert. Da die Turbomaschinen häufig bei kryogenen Temperaturen, beispielsweise zur Verdichtung und zum Transport von verdampfendem Flüssigerdgas (LNG) oder zum Entspannen von Gasen bei der Zerlegung von Luft, eingesetzt werden, führt die Verbindung von Maschinen- und Stufengehäuse zu einem intensiven Wärmetransport von der elektrischen Maschine hin zum kalten Inneren des Stufengehäuses. Ein solcher, unkontrollierter Wärmestrom kühlt die elektrische Maschine derartig aus, dass sowohl das Material der Wicklungen spröde und damit schwingungsbruchanfällig wird als auch eventuell beteiligte Permanentmagnete entmagnetisiert und somit unwirksam werden. Der unkontrollierte Wärmestrom kann ferner die Wellenlager sehr stark auskühlen, so dass darin verwendete Schmierstoffe bis zur Unbrauchbarkeit stocken.

Aus der US 5 980 218 ist ein mehrstufiger Kompressor mit einem zwischen den Kompressorstufen angeordneten Gaskühler bekannt. Ein Teilstrom des aus dem Gaskühler austretenden Gasstromes wird abgezweigt und zur Kühlung der elektrischen Maschine des Kompressors zugeführt. Der mehrstufige Kompressor ist nicht für Tieftemperaturanwendungen vorgesehen.

Aus der US 5 249 934 ist eine Maschine zur Konditionierung von Luft bekannt, bei der Kompressor und Turbinenstufen auf einer gemeinsamen Welle mit dem jeweiligen Rücken direkt einander zugewandt unmittelbar nebeneinander angeordnet sind. Um den Wärmestrom zwischen der Kompressor- und der Turbinenstufe geringzuhalten, ist zwischen den Stufen eine ringförmige Scheibe mit geringer Wärmeleitfähigkeit angeordnet. Die Kompressorstufe wird direkt durch die Turbinenstufe angetrieben.

Der Erfindung liegt die Aufgabe zugrunde, eine Turbomaschine mit den eingangs beschriebenen Merkmalen anzugeben, bei der einerseits eine unkontrollierte Auskühlung der elektrischen Maschine und der Wellenlager wirksam verändert wird, und bei der andererseits gleichzeitig eine ausreichende Kühlung der elektrischen Maschine gewährleistet ist.

Erfindungsgemäß wird die Aufgabe dadurch gelöst, dass zwischen dem Stufengehäuse und dem Maschinengehäuse eine aus Isoliermaterial bestehende Trennwand angeordnet ist, welche das Stufengehäuse von dem Maschinengehäuse thermisch trennt, und dass an den Strömungsweg des kalten Gases eine mit einer Durchflussregelarmatur versehene Leitung zur Abzweigung eines mengengeregeften Kühlstromes angeschlossen ist, welcher der elektrischen Maschine innerhalb des Maschinengehäuses zugeführt wird. Durch die wärmeisolierende Trennwand wird ein unkontrolliertes Auskühlen der elektrischen Maschine und der Wellenlager durch Wärmeleitung zwischen Maschinen- und Stufengehäuse wirksam unterbunden. Die an den Strömungsweg des Kaltgases angeschlossene Abzweigleitung führt eine gezielt einstellbare Menge des Kühlstromes zu den Bereichen der elektrischen Maschine, welche die eingangs beschriebene Wärmeentwicklung aufweisen und gewährleistet entsprechend eine ausreichende, genau dosierbare Kühlung der elektrischen Maschine. Vorzugsweise ist die Leitung hierbei an die Druckseite des Strömungsweges angeschlossen, also bei einer als Turbine betriebenen Turbomaschine in Strömungsrichtung gesehen vor dem Turbinenlaufrad bzw. bei einer als Verdichter betriebenen Turbomaschine in Strömungsrichtung gesehen hinter dem Verdichterlaufrad.

Zweckmäßigerweise ist an die Leitung ein Verteiler angeschlossen, der den Kühlstrom verteilt, wobei die Wicklungen und der Ringspalt zwischen Ständer und Läufer mit den Teilströmen beaufschlagt werden. Hierdurch ist gewährleistet, dass gezielt diejenigen Bereiche der elektrischen Maschine mit einem kühlenden Gasstrom versorgt werden, welche die intensivste Wärmeentwicklung aufweisen. Der Verteiler kann hierbei den Kühlstrom in mehrere Einzelleitungen verteilen, die an unterschiedlichen Stellen an das Maschinengehäuse angeschlossen sind oder alternativ aus Verteilerkanälen bestehen, die in die Wandung des Maschinengehäuses integriert sind. Vorzugsweise werden zusätzlich auch die Wellenlager mit Teilströmen des Kühlstromes beaufschlagt. Hierdurch ist gegebenenfalls auch eine ausreichende Kühlung von nicht mit ausreichenden Schmierölmengen zum Zwecke der Kühlung versorgten Lagern, wie z. B. Magnet- oder Gaslager oder fett- oder minimalölgeschmierte Wälzlager, gewährleistet.

Vorzugsweise ist an dem Innenraum des Maschinengehäuses eine Rückflussleitung angeschlossen, die zurück zur Gasleitung auf der Niederdruckseite des Stufengehäuses oder zum Niederdruckbereich des Stufengehäuses selbst führt und eine Rückführung des in das Maschinengehäuse eingeleiteten Gases ermöglicht. Hierdurch wird vermieden, dass das in das Maschinengehäuse eingeleitete Kaltgas in die Umgebung abgegeben wird, was vor allem bei giftigen oder brennbaren Gasen von Bedeutung ist.

Die elektrische Maschine kann als Elektromotor oder als Generator und das Laufrad entsprechend als Verdichter- oder als Turbinenlaufrad ausgebildet sein. Je nach Anwendungsfall kann an dem anderen Ende der Rotorwelle ein zweites Laufrad fliegend angeordnet sein. In diesem Falle ist zwischen dem Stufengehäuse des zweiten Laufrades und dem Maschinengehäuse zweckmäßigerweise entsprechend ebenfalls eine erfindungsgemäße Trennwand zur thermischen Trennung der beiden letztgenannten Gehäuse vorgesehen. Beide Laufräder können jeweils wahlweise als Verdichter- oder als Turbinenlaufrad ausgebildet sein, wobei die elektrische Maschine entsprechend als Elektromotor bzw. als Generator ausgebildet ist. Für den Fall, dass ein Laufrad als Turbine und das andere Laufrad als Verdichter fungiert und je nach Betriebszustand der Rotorwelle abwechselnd, bzw. entweder eine Leistungszu- oder abfuhr durch die elektrische Maschine erfolgen muss, ist diese entweder Motor oder Generator. Die Wellenlager können - wie bereits erwähnt - als Magnetlager, Gaslager, Wälzlager, insbesondere fett- oder minimalölgeschmierte Wälzlager, oder auch als hydraulische Gleitlager ausgebildet sein. Das Maschinengehäuse kann je nach Anwendungsfall als druckfeste Kapsel ausgeführt sein, die für einen Betrieb in explosionsgefährdeter Umgebung geeignet ist.

Im Folgenden wird die Erfindung anhand einer lediglich ein Ausführungsbeispiel darstellenden Zeichnung ausführlich erläutert. Es zeigen schematisch:
- Fig. 1: eine erfindungsgemäße Turbomaschine in Schnittdarstellung und
- Fig. 2: eine weitere Ausführungsform der Erfindung.

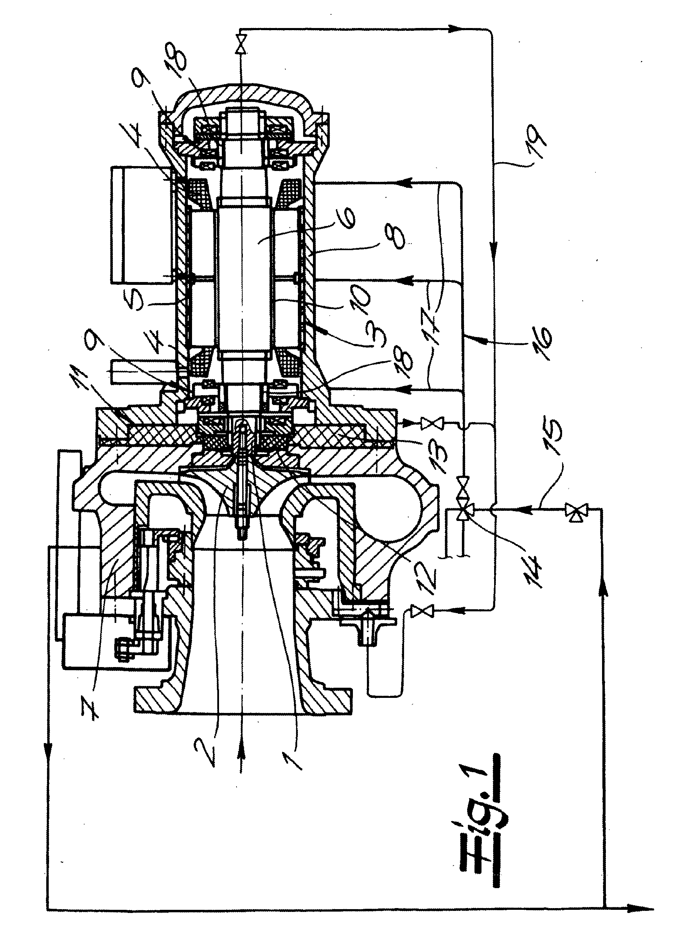

Die Fig. 1 zeigt eine Turbomaschine für Tieftemperaturanwendungen. Sie besitzt eine Rotorwelle 1, ein an einem Wellenende der Rotorwelle 1 fliegend angeordnetes Laufrad 2, eine elektrische Maschine 3 mit einem Wicklungen 4 aufweisenden Ständer 5 und einen auf der Rotorwelle 1 angeordneten elektrischen Läufer 6, so dass Laufrad 2 und Läufer 6 mit gleicher Drehzahl rotieren. Ferner ist ein Stufengehäuse 7, welches das Laufrad 2 umgibt und Anschlüsse für ein das Stufengehäuse 7 durchströmendes kaltes Gas aufweist, und ein Maschinengehäuse 8 vorgesehen, in dem die elektrische Maschine 3 und Wellenlager 9 für die Rotorwelle 1 angeordnet sind, wobei sich die Wellenlager 9 beidseits des Läufers 6 befinden. Das Maschinengehäuse 8 ist mit dem Stufengehäuse 7 verbunden. Der Ständer 5 ist an der Innenseite des Maschinengehäuses 8 befestigt und unter Bildung eines Ringspaltes 10 vom elektrischen Läufer 6 beabstandet. Zwischen dem Stufengehäuse 7 und dem Maschinengehäuse 8 ist eine aus Isoliermaterial bestehende Trennwand 11 angeordnet, welche das Stufengehäuse 7 von dem Maschinengehäuse 8 thermisch trennt. Die Trennwand 11 ist im Ausführungsbeispiel zweiteilig ausgebildet und besteht aus einem Innenelement 12 und einem Außenelement 13. An dem Strömungsweg des kalten Gases ist eine mit einer Durchflussregelarmatur 14 versehene Leitung 15 zur Abzweigung eines mengengeregelten Kühlstromes angeschlossen, welcher der elektrischen Maschine 3 innerhalb des Maschinengehäuses 8 zugeführt wird. Der Kühlstrom wird an der Druckseite des Strömungsweges des kalten Gases abgezweigt. Da im Ausführungsbeispiel das Laufrad 2 als Verdichterlaufrad ausgebildet ist, erfolgt die Entnahme des Kühlstroms entsprechend stromab des Stufengehäuses 7. An die Leitung 15 ist ein Verteiler 16 angeschlossen, der den Kühlstrom in mehrere Einzelleitungen 17 verteilt. Über die Einzelleitungen 17 werden die Wicklungen 4, der Ringspalt 10 zwischen Ständer 5 und Läufer 6 und die Spalte 18 der als Magnetlager ausgebildeten Wellenlager 9 gezielt mit Teilströmen des Kühlstromes beaufschlagt.

An den Innenraum des Maschinengehäuses 8 ist eine Rückflussleitung 19 angeschlossen, die zurück zum Niederdruckbereich des Stufengehäuses 7 führt und eine Rückführung des in das Maschinengehäuse 8 eingeleiteten Gases ohne ein zusätzliches Förderaggregat ermöglicht. Das Maschinengehäuse 8 ist als druckfeste Kapsel ausgeführt, die für einen Betrieb in explosionsgefährdeter Umgebung geeignet ist. Hierdurch ist es möglich, die elektrische Maschine 3 auch mit einem brennbaren Kaltgas zu kühlen, welches bei Kontakt mit der Umgebungsluft zu einer explosiven und leicht entzündlichen Gemischbildung führen kann. Im Ausführungsbeispiel wird Erdgas bei Umgebungsdruck von - 140°C angesaugt und mithilfe des Verdichterlaufrades auf ca. 1 bar Überdruck verdichtet. Hierbei wird das Gas auf -110°C erwärmt. Das Laufrad 2 wird über die Rotorwelle 1 angetrieben, die mithilfe des integrierten Elektromotors 3 im Ausführungsbeispiel eine Leistung von etwa 200 kW bei 30.000 Umdrehungen pro Minute überträgt.

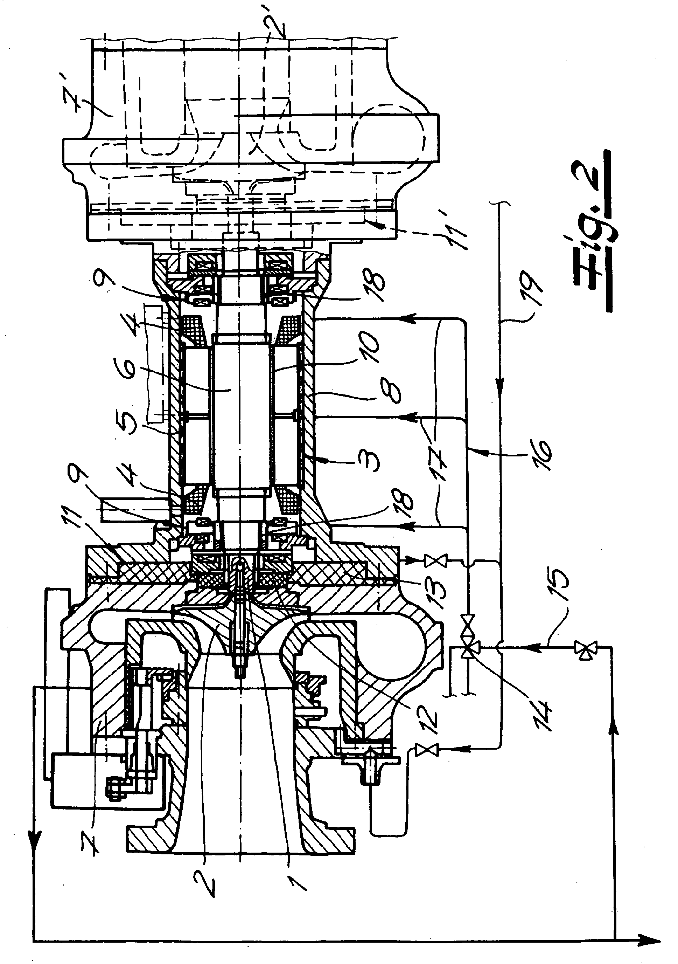

Im Ausführungsbeispiel gemäß Fig. 2 ist an dem anderen Ende der Rotorwelle 1 ein zweites Laufrad 2' fliegend angeordnet. Das Stufengehäuse 7' des zweiten Laufrades 2', welches ebenfalls zur Verdichtung eines kalten Gases verwendet wird, ist in analoger Weise durch eine aus einem Isoliermaterial mit sehr niedriger Wärmeleitzahl bestehenden Trennwand 11' von dem Maschinengehäuse thermisch getrennt.

## Patentansprüche

1. Turbomaschine für Tieftemperaturanwendungen mit
Rotorwelle (1),
mindestens einem an einem Wellenende der Rotorwelle (1) fliegend angeordneten Laufrad (2),
einer elektrischen Maschine (3) mit einem Wicklungen (4) aufweisenden Ständer (5) und einem auf der Rotorwelle (1) angeordneten elektrischen Läufer (6),
einem Stufengehäuse (7), welches das Laufrad (2) umgibt und Anschlüsse für ein das Laufrad (2) durchströmendes kaltes Gas aufweist, und
einem Maschinengehäuse (8), in dem die elektrische Maschine (3) und Wellenlager (9) für die Rotorwelle (1) angeordnet sind,
wobei das Maschinengehäuse (8) mit dem Stufengehäuse (7) verbunden ist, **dadurch gekennzeichnet, dass** zwischen dem Stufengehäuse (7) und dem Maschinengehäuse (8) eine aus Isoliermaterial bestehende Trennwand (11) angeordnet ist, welche das Stufengehäuse (7) von dem Maschinengehäuse (8) thermisch trennt, und dass an den Strömungsweg des kalten Gases eine mit einer Durchflussregelarmatur (14) versehene Leitung (15) zur Abzweigung eines mengengeregelten Kühlstromes angeschlossen ist, welcher der elektrischen Maschine (3) innerhalb des Maschinengehäuses (8) zugeführt wird.

2. Turbomaschine nach Anspruch 1, **dadurch gekennzeichnet, dass** an die Leitung (15) ein Verteiler (16) angeschlossen ist, der den Kühlstrom verteilt, und dass die Wicklungen (4) und der Ringspalt (10) zwischen Ständer (5) und Läufer (6) mit den Teilströmen beaufschlagt werden.

3. Turbomaschine nach Anspruch 2, **dadurch gekennzeichnet, dass** auch die Wellenlager (9) mit Teilströmen des Kühlstromes beaufschlagt werden.

4. Turbomaschine nach einem der Ansprüche 1 bis 3, **dadurch gekennzeichnet, dass** an den Innenraum des Maschinengehäuses (8) eine Rückflussleitung (19) angeschlossen ist, die zurück zur Gasleitung auf der Niederdruckseite des Stufengehäuses (7) oder zum Niederdruckbereich des Stufengehäuses (7) selbst führt und eine Rückführung des in das Maschinengehäuse (8) eingeleiteten Gases ermöglicht.

5. Turbomaschine nach einem der Ansprüche 1 bis 4, **dadurch gekennzeichnet, dass** die elektrische Maschine (3) als Elektromotor oder als Generator und das Laufrad (2) entsprechend als Verdichter- oder als Turbinenlaufrad ausgebildet ist.

6. Turbomaschine nach einem der Ansprüche 1 bis 5, **dadurch gekennzeichnet, dass** an dem anderen Ende der Rotorwelle (1) ein zweites Laufrad (2') fliegend angeordnet ist.

7. Turbomaschine nach einem der Ansprüche 1 bis 6, **dadurch gekennzeichnet, dass** die Wellenlager (9) als Magnetlager, Gaslager, Wälzlager oder als hydraulische Gleitlager ausgebildet sind.

8. Turbomaschine nach einem der Ansprüche 1 bis 7, **dadurch gekennzeichnet, dass** das Maschinengehäuse (8) als druckfeste Kapsel ausgeführt ist, die für einen Betrieb in explosionsgefährdeter Umgebung geeignet ist.

## Claims

1. Turbo motor for cryogenic applications, with
rotor shaft (1),
at least one impeller (2) arranged in an overhung manner at one shaft end of the rotor shaft (1),
an electric machine (3) with a stator (5) having windings (4) and an electric rotor (6) arranged on the rotor shaft (1),
a stepped housing (7) which surrounds the impeller (2) and has connections for a cold gas flowing through the impeller (2), and
a machine housing (8), in which the electric machine (3) and shaft bearings (9) for the rotor shaft (1) are arranged,
wherein the machine housing (8) is connected to the stepped housing (7), **characterised in that** a separating wall (11) which thermally separates the stepped housing (7) from the machine housing (8) and consists of insulation material is arranged between the stepped housing (7) and the machine housing (8), and **in that** a line (15) provided with a flow control armature (14) is attached to the flow path of the cold gas for branching a flow-rate-controlled cooling flow which is supplied to the electric machine (3) within the machine housing (8).

2. Turbo motor according to Claim 1, **characterised in that** a distributor (16) which distributes the cooling flow is attached to the line (15), and **in that** the windings (4) and the annular gap (10) between stator (5) and rotor (6) are loaded with the partial flows.

3. Turbo motor according to Claim 2, **characterised in that** the shaft bearings (9) are also loaded with partial flows of the cooling flow.

4. Turbo motor according to any one of Claims 1 to 3, **characterised in that** a return flow line (19), which leads back to the gas line on the low-pressure side of the stepped housing (7) or leads to the low-pressure region of the stepped housing (7) itself and enables a return of the gas introduced into the machine housing (8), is attached to the interior of the machine housing (8).

5. Turbo motor according to any one of Claims 1 to 4, **characterised in that** the electric machine (3) is constructed as an electric motor or as a generator and the impeller (2) is correspondingly constructed as a compressor impeller or as a turbine impeller.

6. Turbo motor according to any one of Claims 1 to 5, **characterised in that** a second impeller (2') is arranged in an overhung manner at the other end of the rotor shaft (1).

7. Turbo motor according to one of Claims 1 to 6, **characterised in that** the shaft bearings (9) are constructed as magnetic bearings, gas bearings, roller bearings or as hydraulic friction bearings.

8. Turbo motor according to one of Claims 1 to 7, **characterised in that** the machine housing (8) is realised as a pressure-resistant capsule which is suitable for operation in an environment at risk of explosion.

## Revendications

1. Turbomachine pour des applications à basse température comprenant
arbre de rotor (1),
au moins une roue à aubes (2) disposée de façon mobile sur une extrémité d'arbre de l'arbre de rotor (1),
une machine (3) électrique avec un stator (5) présentant des enroulements (4) et un rotor (6) électrique disposé sur l'arbre de rotor (1),
un boîtier à étages (7), qui entoure la roue à aubes (2) et présente des branchements pour un gaz froid traversant la roue à aubes (2), et
un carter de machine (8) dans lequel sont disposés la machine (3) électrique et des paliers d'arbre (9) pour l'arbre de rotor (1),
le carter de machine (8) étant relié au boîtier à étages (7), **caractérisé en ce qu'**entre le boîtier à étages (7) et le carter de machine (8) est disposée une paroi de séparation (11) à base de matériau isolant, qui sépare thermiquement le boîtier à étages (7) du carter de machine (8), et **en ce qu'**à la course d'écoulement du gaz froid est raccordée une conduite (15) dotée d'un régulateur de débit (14) pour la dérivation d'un flux de refroidissement réglé au niveau de la quantité, lequel est amené à la machine (3) électrique à l'intérieur du carter de machine (8).

2. Turbomachine selon la revendication 1, **caractérisé en ce qu'**un répartiteur (16), qui répartit le flux de refroidissement, est raccordé à la conduite (15) et **en ce que** les enroulements (4) et la fente annulaire (10) entre le stator (5) et le rotor (6) sont alimentés avec les flux partiels.

3. Turbomachine selon la revendication 2, **caractérisée en ce que** les paliers d'arbre (9) sont alimentés avec des flux partiels du flux de refroidissement.

4. Turbomachine selon l'une quelconque des revendications 1 à 3, **caractérisée en ce qu'**à l'espace intérieur du carter de machine (8) est raccordée une conduite retour (19) qui revient à la conduite de gaz sur le côté basse pression du boîtier à étages (7) ou à la plage basse pression du boîtier à étages (7) même et permet une recyclage du gaz introduit dans le carter de machine (8).

5. Turbomachine selon l'une quelconque des revendications 1 à 4, **caractérisée en ce que** la machine (3) électrique est conçu comme moteur électrique ou comme générateur et la roue à aubes (2) est conçu en conséquence comme roue à aubes de compresseur ou comme roue à aubes de turbine.

6. Turbomachine selon l'une quelconque des revendications 1 à 5, **caractérisé en ce qu'**une seconde roue à aubes (2') est disposée de façon mobile sur l'autre extrémité de l'arbre de rotor (1).

7. Turbomachine selon l'une quelconque des revendications 1 à 6, **caractérisée en ce que** les paliers d'arbre (9) sont conçus comme des paliers magnétiques, des paliers à gaz, des paliers à roulement ou comme des paliers lisses hydrauliques.

8. Turbomachine selon l'une quelconque des revendications 1 à 7, **caractérisée en ce que** le carter de machine (8) est conçu comme une capsule résistante à la pression qui convient pour une exploitation dans un environnement exposé à un risque d'explosion.
